# EUROPEAN PATENT SPECIFICATION

(11) **EP 2 079 174 B1**
(45) Date of publication and mention of the grant of the patent: **04.12.2013**
(21) Application number: 07801122.8
(22) Date of filing: 19.09.2007
(51) Int. Cl.: H04B 10/60, H04B 10/25

(54) **APPARATUS AND METHOD FOR SUPPLYING POWER TO AVALANCHE PHOTODIDE RECEIVERS**
STROMVERSORGUNGSGERÄTE UND VERFAHREN FÜR EINEN AMPRFÄNGER MIT EINER AVALANCHE-FOTODIODE
ÉQUIPEMENT ET PROCÉDÉ D'ALIMENTATION ÉLECTRIQUE POUR RÉCEPTEUR DE PHOTODIODE À AVALANCHE

(30) Priority: 20.10.2006 CN 200610113921
(43) Date of publication of application: 15.07.2009
(73) Proprietor: Huawei Technologies Co., Ltd., Shenzhen, Guangdong Province 518129 (CN)
(72) Inventor: ZHANG, Naisheng, Shenzhen Guangdong 518129 (CN); SHA, Xingyue, Shenzhen Guangdong 518129 (CN)
(74) Representative: Körber, Martin Hans
(86) International application number: PCT/CN2007/070730
(87) International publication number: WO 2008/046334

(56) References cited:
- EP-A- 1 883 794
- WO-A-03/079581
- CN-A- 1 558 657
- CN-A- 1 698 294
- CN-A- 1 790 946
- CN-A- 1 960 215
- JP-A- 2006 128 940
- US-A1- 2002 195 545
- US-A1- 2005 224 697
- US-A1- 2006 157 646

## Description

### FIELD OF THE INVENTION

The present invention relates to the field of communication technologies, and in particular, to an apparatus and a method for supplying power to multiple avalanche photodiode receivers.

### BACKGROUND

With the development of communication services, the communication network requires increasingly high transmission bandwidth, and communication equipment needs to improve the system integration while providing high bandwidth. One of the ideal methods for fulfilling the foregoing requirements is to integrate multiple electric/optical and/or multiple optical/electric functions into one board or optical module.

An Avalanche Photodiode (APD) receiver is generally used for implementing the optical-electric conversion in order to fulfill the sensitivity indices of the receiver. The normal work of an APD requires a very high bias voltage, which generally ranges from 30 V to 70 V. The bias voltage is generated through a boost circuit from the low-voltage power supply (for example, +5 V power supply). The value of the bias voltage directly affects the sensitivity indices of the APD.

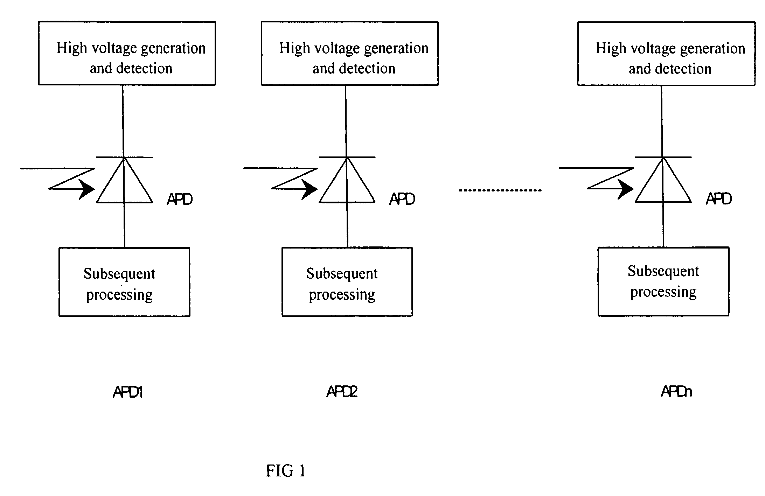

When multiple optical/electric conversion functions of the APD receiver are integrated into one board or optical module, each APD circuit uses a separate bias voltage to ensure the sensitivity indices of the APD in the prior art, as shown in Figure 1. However, this leads to complicated circuits, low integration, large size of the device, and high cost.
Patent US2002/195545 A1 demonstrates a photodiode array includes a plurality of arrayed individual diode devices. The arrayed diode devices include at least one active photodiode and at least one reference diode. A bias control circuit for the array monitors operation of the reference diode at an applied first bias voltage and adjusts that applied first bias voltage until optimal reference diode operation is reached. A second bias voltage having predetermined relationship to the first bias voltage is applied to active photodiode to optimally configure array operation. More specifically, an operational characteristic of the reference diode at the first bias voltage is monitored and compared to a reference value. As a result of the comparison, the circuit adjusts the applied first and second bias voltage in order to drive the reference diode measured characteristic to substantially match the reference value. The operational characteristic that is measured may comprise reference diode responsivity or reference diode output current, and may be based on either electrical or optical device operation.
Patent US2006/157646 A1 is directed to an optical receiver that prevents the instability of the bias voltage to the avalanche photodiode (APD) and facilitates the recovery of the bias voltage from the safety value. The optical receiver comprises the APD, the DC-DC converter to supply the bias voltage to the APD, the current detector to detect the photo current generate by the APD, and the controller to set the bias voltage. The controller, evaluating the optical input power based on the output voltage of the DC-DC converter and the monitored current, sets the output voltage based on the change of the optical input power.

### SUMMARY

The present invention provides an apparatus and a method for supplying power to an APD receiver to overcome the disadvantages, such as complicated supply circuits, low integration, large size and high cost of the APD, in the prior art.

The objectives of the present invention are fulfilled through the following technical solutions.

An embodiment of the present invention provides an apparatus for supplying power to multiple APD receivers, including:
a bias high-voltage generating circuit, connected with parallel APD receivers through a bus, and adapted to generate a bias voltage which is greater than or equal to a maximum value of a rated bias voltage of each tributary APD and distribute the bias voltage to the tributary APDs;
an adjusting and detecting circuit, set on each APD tributary, connected between a bias high-voltage generating circuit and an APD, and adapted to adjust a voltage value distributed to each APD according to the avalanche voltage or rated bias voltage value of each tributary APD; wherein,

the adjusting and detecting circuit adjusts voltage distributed to each APD in a voltage fall mode.An embodiment of the present invention further provides a method for supplying power to multiple APD receivers, including:
generating, by a bias high-voltage generating circuit, a bias voltage required by each tributary APD receiver;
distributing the generated bias voltage which is greater than or equal to a maximum value of a rated bias voltage of each tributary APD to parallel tributary APD receivers through a bus and
adjusting, by the the adjusting and detecting circuit, the voltage value distributed to each APD according to the avalanche voltage or rated bias voltage value of each tributary APD; wherein,
the adjusting and detecting circuit adjusts voltage distributed to each APD in a voltage fall mode.

It can be seen from the foregoing technical solution according to the embodiments of the present invention that: An apparatus provides power supply to multiple APD receivers, thus avoiding the complicated high-voltage generating circuit required in the prior art, reducing the cost, and enabling the apparatus to occupy less space.

### BRIEF DESCRIPTION OF THE DRAWINGS

Figure 1 shows the APD power supply in the prior art;

Figure 2 shows the connection relation between an apparatus and multiple APD receivers according to an embodiment of the present invention; and

Figure 3 shows the connection relation between an apparatus and multiple APD receivers according to another embodiment of the present invention.

### DETAILED DESCRIPTION

The present invention provides an apparatus and a method for supplying power to an APD receiver. A bias high-voltage generating circuit generates the bias voltage required by multiple APD receivers, thus reducing high-voltage generating circuits and reducing costs.

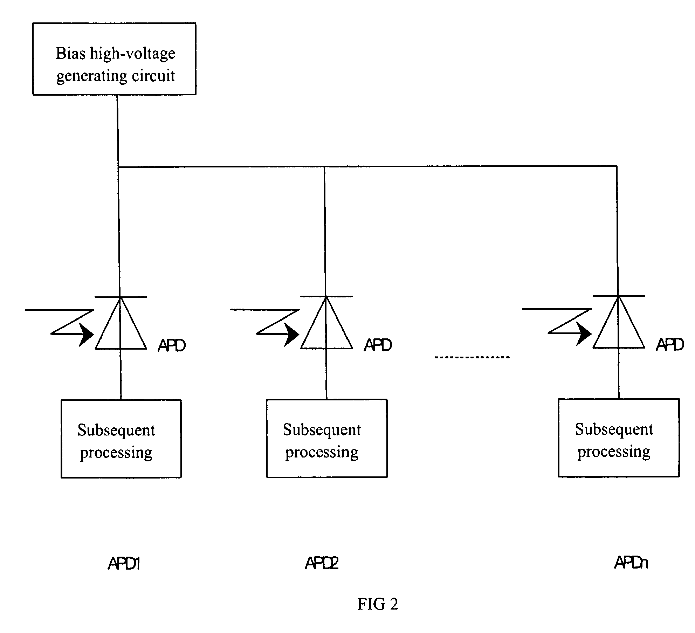

The present invention provides an apparatus for supplying power to an APD receiver. The connection relation between the apparatus and the APD is as shown in Figure 2. The apparatus includes a bias high-voltage generating circuit, which is adapted to generate the bias voltage required by each tributary APD. The current generated by the bias high-voltage generating circuit must be greater than or equal to the total bias current of multiple channels of APD receivers which work normally. Meanwhile, the voltage value generated by the bias high-voltage generating circuit should be as high as possible if only it is less than the avalanche voltage of every APD, thus improving the sensitivity indices of the APD while ensuring the APD security.

The bias high-voltage generating circuit is connected with parallel tributary APD receivers through a bus, and the bias high-voltage generated by it is distributed to the tributary APD receivers through the bus.

Accordingly, a method for supplying power to multiple APD receivers according to an embodiment of the present invention is as follows:

First, the bias high-voltage generating circuit generates the bias voltage required by each tributary APD. The current generated by the circuit is greater than or equal to the total bias current of multiple channels of APD receivers which work normally. Meanwhile, the voltage value generated by the bias high-voltage generating circuit is less than the avalanche voltage of every APD.

Then, the bias circuit generated by the bias high-voltage generating circuit is distributed to every tributary APD through the bus.

Finally, the APD performs optical-electric conversion, and performs subsequent processing for converted signals, including: Trans-impedance Amplifier (TIA), Limiting Amplifier (LA), and Clock and Data Recover (CDR).

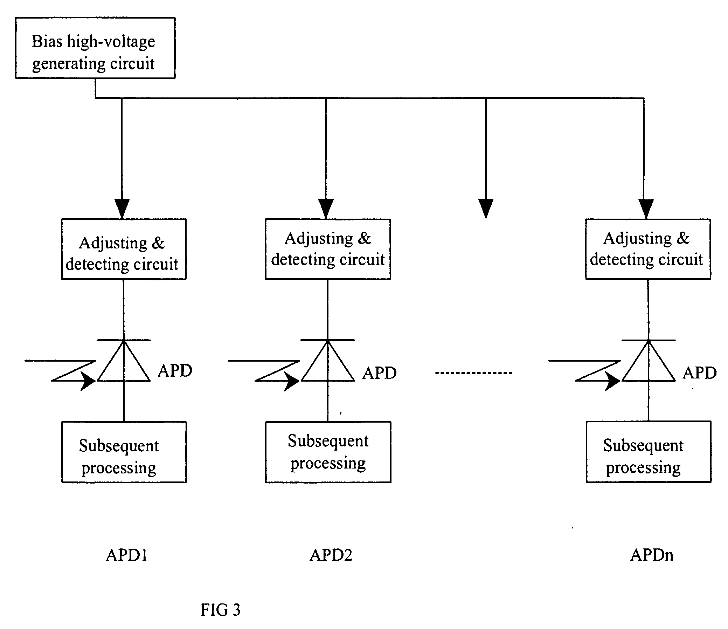

An apparatus for supplying power to multiple APD receivers according to another embodiment of the present invention is as shown in Figure 3. The apparatus includes a bias high-voltage generating circuit, and an adjusting and detecting circuit. The bias high-voltage generating circuit is adapted to generate the bias voltage required by each tributary APD, where the current generated by the bias high-voltage generating circuit should be greater than or equal to the total bias current of multiple channels of APD receivers which work normally. Meanwhile, the voltage value generated by the bias high-voltage generating circuit should be as high as possible if only it ensures APD security, thus improving the sensitivity indices of the APD. Here the voltage generated by the bias high-voltage generating circuit may be higher than the avalanche voltage of the APD, and the adjusting and detecting circuit of each tributary is adapted to adjust the voltage distributed to each AP, so that the actual voltage of each APD is not higher than its avalanche voltage. The bias high-voltage generating circuit is connected with parallel tributary APD receivers through a bus, and the bias high-voltage generated by it is distributed to the tributary APD receivers through the bus.

The adjusting and detecting circuit is set on each APD tributary, and connected between the bias high-voltage generating circuit and the APD. It is adapted to adjust the voltage value distributed to each tributary APD as required by each APD, namely, adjust the voltage value output to each tributary APD according to the avalanche voltage or rated bias voltage value of each tributary APD. Moreover, the adjusting and detecting circuit is capable of detecting the working state of each APD in real time. The detection method includes: detecting whether the APD working state is normal according to the optical signal parameters input into the APD and the current of the electric signals output from the APD. The input optical signal parameters include optical power.

In order to simplify the adjusting and detecting circuit of each APD, all adjusting and detecting circuits may be set as the voltage fall mode. In this case, the voltage value generated by the bias high-voltage generating circuit should be greater than or equal to the maximum value of the rated bias value of each APD.

Accordingly, a method for supplying power to multiple APD receivers according to another embodiment of the present invention is as follows:

First, the bias high-voltage generating circuit generates the bias voltage required by each tributary APD, where the current generated by the bias high-voltage generating circuit should be greater than or equal to the total bias current of multiple channels of APD receivers which work normally.

Then, the adjusting and detecting circuit adjusts the bias voltage generated by the bias high-voltage generating circuit, and distributes it to each tributary APD. The adjusting and detecting circuit allows the output voltage to be set according to the requirement of each APD, for example, allows the output voltage to be adjusted according to the avalanche voltage or rated bias voltage value of each tributary APD; and detects the working state of each APD in real time.

Finally, the APD converts the input optical signal to an electric signal under a proper bias voltage, and performs subsequent processing for the electric signal, including TIA, LA and CDR.

In an embodiment of the present invention, the APD receiver power supply apparatus provides power supply to multiple APD receivers, thus avoiding the complicated high-voltage generating circuit required in the prior art, reducing the cost, and enabling the apparatus to occupy less space. Moreover, a simple adjusting and detecting circuit is added to each APD to ensure each APD to work in the best state, ensure fulfillment of the sensitivity indices of each APD, and detect the working performance of each APD in real time.

Although the invention has been described through some preferred embodiments, the invention is not limited to such embodiments. It is apparent that those skilled in the art can make various modifications and substitutions to the invention without departing from the scope of the invention. The invention is intended to cover the modifications and substitutions provided that they fall in the scope of protection defined by the following claims or their equivalents.

## Claims

1. An apparatus for supplying power to multiple Avalanche Photodiode (APD) receivers, comprising:
a bias high-voltage generating circuit, connected with parallel APD receivers through a bus, and adapted to generate a bias voltage which is greater than or equal to a maximum value of a rated bias voltage of each tributary APD and distribute the bias voltage to tributary APDs;
an adjusting and detecting circuit, set on each APD tributary, connected between a bias high-voltage generating circuit and an APD, and adapted to adjust a voltage value distributed to each APD according to the avalanche voltage or rated bias voltage value of each tributary APD; wherein,
the adjusting and detecting circuit adjusts voltage distributed to each APD in a voltage fall mode.

2. The apparatus of claim 1, wherein the adjusting and detecting circuit is further adapted to detect a working state of each APD in real time.

3. The apparatus of claim 2, wherein the current value generated by the bias high-voltage generating circuit is greater than or equal to a total bias current value of multiple channels of APDs which work normally, and the generated voltage value is less than avalanche voltage of each APD.

4. A method for supplying power to multiple Avalanche Photodiode (APD) receivers, comprising:
generating, by a bias high-voltage generating circuit, a bias voltage required by each tributary APD receiver;
distributing the generated bias voltage which is greater than or equal to a maximum value of a rated bias voltage of each tributary APD to parallel tributary APD receivers through a bus; and
adjusting, by the adjusting and detecting circuit, the voltage value distributed to each APD according to the avalanche voltage or rated bias voltage value of each tributary APD; wherein,
the adjusting and detecting circuit adjusts voltage distributed to each APD in a voltage fall mode.

5. The method of claim 4, further comprising:
detecting a working state of each APD in real time.

## Patentansprüche

1. Vorrichtung zum Zuführen von Leistung zu mehreren Avalanche-Photodioden- bzw. APD-Empfängern, umfassend:
eine Hoch-Vorspannung-Erzeugungsschaltung, die mit parallelen APD-Empfängern durch einen Bus verbunden ist und ausgelegt ist, eine Vorspannung zu erzeugen, die größer als oder gleich einem maximalen Wert einer Nenn-Vorspannung jeder beisteuernden APD ist und die Vorspannung zu beisteuernden APDs verteilt;
eine Anpassungs- und Detektionsschaltung, gesetzt auf jede beisteuernde APD, verbunden zwischen einer Hoch-Vorspannung-Erzeugungsschaltung und einer APD, und ausgelegt zum Anpassen eines zu jeder APD verteilten Spannungswerts gemäß dem Avalanche-Spannungs- oder Nenn-Vorspannungswert jeder beisteuernden APD; wobei die Anpassungs- und Detektionsschaltung zu jeder APD verteilte Spannung in einem Spannungsabfallmodus anpasst.

2. Vorrichtung nach Anspruch 1, wobei die Anpassungs- und Detektionsschaltung ferner ausgelegt ist, einen Arbeitszustand jeder APD in Echtzeit zu detektieren.

3. Vorrichtung nach Anspruch 2, wobei der von der Hoch-Vorspannung-Erzeugungsschaltung erzeugte Stromwert größer als oder gleich einem gesamten Vorspannungsstromwert von mehreren Kanälen von APDs ist, die normal arbeiten, und der erzeugte Spannungswert kleiner als die Avalanche-Spannung jeder APD ist.

4. Verfahren zum Zuführen von Leistung zu mehreren Avalanche-Photodioden- bzw. APD-Empfängern, umfassend:
Erzeugen, durch eine Hoch-Vorspannung-Erzeugungsschaltung, einer Vorspannung, die von jedem beisteuernden APD-Empfänger benötigt wird;
Verteilen der erzeugten Vorspannung, die größer als oder gleich einem maximalen Wert einer Nenn-Vorspannung jeder beisteuernden APD ist, zu parallelen beisteuernden APD-Empfängern durch einen Bus; und
Anpassen, durch die Anpassungs- und Detektionsschaltung, des zu jeder APD verteilten Spannungswerts gemäß dem Avalanche-Spannungs- oder Nenn-Vorspannungswert jeder beisteuernden APD; wobei
die Anpassungs- und Detektionsschaltung zu jeder APD verteilte Spannung in einem Spannungsabfallmodus anpasst.

5. Verfahren nach Anspruch 4, ferner umfassend:
Detektieren eines Arbeitszustands jeder APD in Echtzeit.

## Revendications

1. Appareil destiné à alimenter en courant de multiples récepteurs à Photodiodes à Avalanche (APD, Avalanche PhotoDiode), comprenant :
un circuit générateur de haute tension de polarisation, connecté à des récepteurs APD parallèles par l'intermédiaire d'un bus, et apte à générer une tension de polarisation qui est supérieure ou égale à une valeur maximale d'une tension de polarisation nominale de chaque APD tributaire et à distribuer la tension de polarisation à des APD tributaires ;
un circuit d'ajustement et de détection, positionné sur chaque APD tributaire, connecté entre un circuit générateur de haute tension de polarisation et une APD, et apte à ajuster une valeur de tension distribuée à chaque APD en fonction de la valeur de la tension d'avalanche ou de la tension de polarisation nominale de chaque APD tributaire ; dans lequel
le circuit d'ajustement et de détection ajuste la tension distribuée à chaque APD dans un mode de chute de tension.

2. Appareil selon la revendication 1, dans lequel le circuit d'ajustement et de détection est en outre apte à détecter en temps réel un état de fonctionnement de chaque APD.

3. Appareil selon la revendication 2, dans lequel la valeur de courant générée par le circuit générateur de haute tension de polarisation est supérieure ou égale à une valeur de courant de polarisation totale de multiples canaux des APD qui fonctionnent normalement, et dans lequel la valeur de tension générée est inférieure à la tension d'avalanche de chaque APD.

4. Procédé d'alimentation en courant de multiples récepteurs à Photodiodes à Avalanche (APD), comprenant :
la génération, par un circuit générateur de haute tension de polarisation, d'une tension de polarisation requise par chaque récepteur APD tributaire ;
la distribution de la tension de polarisation générée qui est supérieure ou égale à une valeur maximale d'une tension de polarisation nominale de chaque APD tributaire à des récepteurs à APD tributaires parallèles par l'intermédiaire d'un bus ; et
l'ajustement, par le circuit d'ajustement et de détection, de la valeur de tension distribuée à chaque APD en fonction de la valeur de la tension d'avalanche ou de la tension de polarisation nominale de chaque APD tributaire ; dans lequel
le circuit d'ajustement et de détection ajuste la tension distribuée à chaque APD dans un mode de chute de tension.

5. Procédé selon la revendication 4, comprenant en outre :
la détection en temps réel d'un état de fonctionnement de chaque APD.
